# EUROPÄISCHE PATENTSCHRIFT

(11) **EP 0 828 628 B1**
(45) Veröffentlichungstag und Bekanntmachung des Hinweises auf die Patenterteilung: **10.10.2001**
(21) Anmeldenummer: 97915323.6
(22) Anmeldetag: 03.03.1997
(51) Int. Cl.: B60K 41/06

(54) **VERFAHREN UND VORRICHTUNG ZUR STEUERUNG DES VON EINER ANTRIEBSEINHEIT ABGEGEBENEN DREHMOMENTS**
PROCESS AND DEVICE FOR REGULATING THE TORQUE DERIVED FROM A DRIVE UNIT
PROCEDE ET DISPOSITIF POUR REGULER LE COUPLE DE ROTATION FOURNI PAR UNE UNITE D'ENTRAINEMENT

(30) Priorität: 26.03.1996 DE 19611839
(43) Veröffentlichungstag der Anmeldung: 18.03.1998
(73) Patentinhaber: ROBERT BOSCH GMBH, 70442 Stuttgart (DE)
(72) Erfinder: ZHANG, Hong, D-93057 Regensburg (DE)
(86) Internationale Anmeldenummer: DE9700378
(87) Internationale Veröffentlichungsnummer: WO9735739

(56) Entgegenhaltungen:
- EP-A- 0 616 919
- EP-A- 0 720 929
- DE-A- 4 232 973
- DE-A- 4 238 919
- DE-A- 19 619 324
- GB-A- 2 277 813

## Beschreibung

### Stand der Technik

Die Erfindung betrifft ein Verfahren und eine Vorrichtung zur Steuerung des von einer Antriebseinheit abgegebenen Drehmoments gemäß den Oberbegriffen der unabhängigen Patentansprüche.

Aus der DE-A 42 39 711 ist bekannt, das Drehmoment einer Antriebseinheit abhängig von einem vorgegebenen Solldrehmomentenwert einzustellen. Dieser wird dabei vom Fahrer durch Betätigen eines Bedienelements oder von zusätzlichen Regelsystemen des Kraftfahrzeugs, wie beispielsweise einer Antriebsschlupfregelung, vorgegeben. Ferner wird im Rahmen der obigen Patentanmeldung vorgeschlagen, daß zur Verbesserung des Schaltvorgangs eines automatischen Getriebes von der Getriebesteuerung ein Sollmomentenwert zur Steuerung der Antriebseinheit übermittelt wird, der das während des Schaltvorgangs zu realisierende Moment repräsentiert. Liegt der Steuerung der Antriebseinheit keine Information über das einzustellende Sollmoment während eines Getriebeeingriffs vor, so kann der Schaltvorgang nicht in gewünschter Weise beherrscht werden. Statt dessen müßte eine aufwendige Anpassung der Verstellung von Zündwinkel, Luft- und/oder Kraftstoffzufuhr abhängig von dem jeweiligen Schaltvorgang vorgegeben werden.

Aus der GB 2 227 813 A ist ein Verfahren zur Steuerung des von einer Antriebseinheit abgegebenen Drehmoments mit den Merkmalen des oberbegriffes des Anspruches 1 oder 9 bekannt, wobei ein maximales Getriebemoment vorgegeben wird. Dieses wird mit anderen Drehmomentgrenzwerten verglichen und das jeweils größte bei der Drehmomentensteuerung berücksichtigt.

In Bosch "Technische Berichte" Band 7, 1983, Seiten 166 ff wird der Motoreingriff einer automatischen Getriebesteuerung beschrieben, wobei das Motormoment durch entsprechende Steuerung des Zündwinkels zeitlich ab- und wieder aufgesteuert wird, um einen geeigneten Drehzahlverlauf während der Schaltung zu erreichen.

Es ist Aufgabe der Erfindung, Maßnahmen anzugeben, mit deren Hilfe das Drehmoment einer Antriebseinheit über einen Sollmomentenwert auch im Zusammenhang mit einem automatischen Getriebe eingestellt werden kann, ohne daß von der Getriebesteuerung derartige Sollwerte vorliegen.

Dies wird durch die kennzeichnenden Merkmale der unabhängigen Patentansprüche 1 und 9 erreicht.

### Vorteile der Erfindung:

Es wird eine Einstellung des von der Antriebseinheit abgegebenen Drehmoments über einen entsprechenden Sollwert auch im Zusammenhang mit einem automatischen Getriebe, während eines Schaltvorgangs, ermöglicht, ohne daß Informationen über die Sollwerte für das einzustellende Drehmoment von der Getriebesteuerung vorliegen.

Besonders vorteilhaft ist, daß diese Vorgehensweise bei Steuersystemen eingesetzt wird, bei denen keine Momenteninformation zwischen Getriebesteuereinheit und Motorsteuereinheit übertragen wird, bzw. im Fehlerfall dieser Übertragung bei Steuersystemen, bei welchem Momentensollwerte von Getriebesteuerung zur Motorsteuerung übermittelt werden.

Besonders vorteilhaft ist ferner, daß zum Getriebeschutz ein maximal einstellbares Drehmoment vorgegeben wird. Dadurch werden Schäden an der Getriebeeinheit bei stehendem oder langsam fahrenden Fahrzeug infolge einer zu großen Drehmomenteneinstellung wirksam vermieden.

Besonders vorteilhaft ist, daß der in bezug auf das Getriebe wirksame Sollmomentenwert von der Motorsteuerung selbst, abhängig von ihr vorliegenden Größen ermittelt wird. In einem vorteilhaften Ausführungsbeispiel ist lediglich die Information über den Schaltvorgang von der Getriebesteuerung notwendig.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 eine Motorsteuereinrichtung, während Figur 2 ein Übersichtsblockschaltbild der erfindungsgemäßen Lösung darstellt. Figur 3 zeigt die erfindungsgemäße Lösung als Flußdiagramm, während in Figur 4 die Wirkungsweise der erfindungsgemäßen Lösung anhand beispielhafter Zeitverläufe dargestellt ist.

### Beschreibung von Ausführungsbeispielen

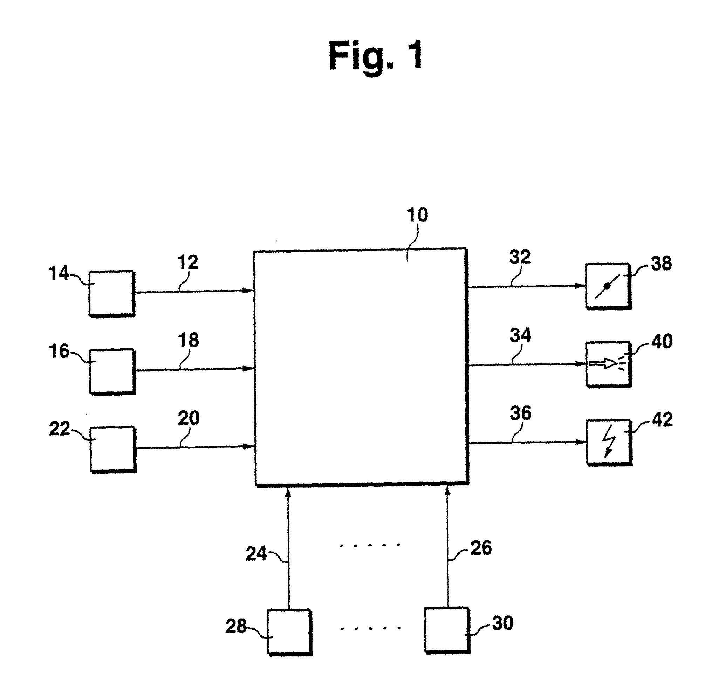

Figur 1 zeigt eine Steuereinheit 10 zur Steuerung des Drehmoments einer Antriebseinheit. Die Steuereinheit 10 umfaßt dabei wenigstens einen nicht dargestellten Mikrocomputer, der abhängig von den zugeführten Eingangsgrößen die Ausgangsgrößen der Steuereinheit 10 im Sinne einer Steuerung des Drehmoments der Antriebseinheit beeinflußt. Im bevorzugten Ausführungsbeispiel wird der Steuereinheit 10 über eine Eingangsleitung 12 ein von einer Meßeinrichtung 14 erfaßtes Betätigungssignal eines Fahrpedals zugeführt. Ferner wird von einem Drehzahlsensor 16 über eine Eingangsleitung 18 der Steuereinheit 10 ein Maß für die Motordrehzahl zugeführt. Ferner wird der Steuereinheit 10 im bevorzugten Ausführungsbeispiel eine Eingangsleitung 20 zugeführt, über die von einer elektronischen Getriebesteuereinheit 22 ein den Schaltvorgang und die Schaltrichtung darstellendes Signal zugeführt wird. Ferner sind Eingangsleitungen 24 bis 26 dargestellt, welche der Steuereinheit 10 von Meßeinrichtungen 28 bis 30 erfaßten Betriebsgrößen der Antriebseinheit bzw. des Fahrzeugs zuführen, wie beispielsweise die Motortemperatur, die eingelegte Gangstufe, die Fahrzeuggeschwindigkeit und/oder der Status von Verbrauchern, wie Klimaanlage, Servolenkung, etc. Über die Ausgangsleitungen 32, 34 und 36 beeinflußt die Steuereinheit 10 das von der Antriebseinheit abgegebene Drehmoment. Im bevorzugten Ausführungsbeispiel einer Brennkraftmaschine werden die Betriebsparameter Luftzufuhr (Leistungsstellelement 38), die Kraftstoffzumessung 40 und/oder der Zündwinkel 42 beeinflußt.

Ausgehend von den zugeführten Betriebsgrößen bildet der Mikrocomputer der Steuereinheit 10 gemäß dem eingangs genannten Stand der Technik einen Solldrehmomentenwert für die Antriebseinheit, der im bevorzugten Ausführungsbeispiel einer Brennkraftmaschine durch Verstellung des die Luftzufuhr beeinflussenden Stellgliedes, durch Beeinflussung der Kraftstoffzufuhr zur Brennkraftmaschine und/oder durch Zündwinkelverstellung im Sinne einer Regelung des Istdrehmoments auf das Solldrehmoment eingestellt wird.

Ein derartiges Sollmoment muß, um eine befriedigende Funktion der Motorsteuerung zu erreichen, nicht nur abhängig von der Gaspedalbetätigung oder im Antriebsschlupfregelfall berechnet und eingestellt werden, sondern auch mit Blick auf die Funktion eines automatischen Getriebes während eines Getriebeeingriffs und/oder als Begrenzung zum Schutz des Getriebes vor Schädigung in bestimmten Arbeitspunkten. Erfindungsgemäß ist daher vorgesehen, daß beim Getriebeeingriff ein Solldrehmoment (indiziertes Motormoment, Verbrennungsmoment oder Kupplungsmoment), abhängig von dem vom Fahrer vorgegebenen Sollmoment, der Motordrehzahl und der Schaltungsrichtung berechnet wird. Wird ein Kupplungsmoment, das heißt das an der Ausgangswelle der Antriebseinheit auftretende Moment, vorgegeben, so sind die Verlustmomente in der Antriebseinheit sowie der Momentenbedarf zusätzlicher Verbraucher zu berücksichtigen. Bei Beginn eines Schaltvorgangs wird das auf diese Weise berechnete Sollmoment von dem aktuellen, vom Fahrer vorgegebenen Wert mit einer zeitlichen Rampe auf den berechneten Sollwert abgeregelt. Beim Ende des Schaltvorgangs wird der Solldrehmomentenwert von dem berechneten Sollwert auf das vom Fahrer vorgegebene Sollmoment mit einer zeitlichen Rampe aufgeregelt. Die Rampensteigungen sind im bevorzugten Ausführungsbeispiel von der Schaltrichtung abhängig.

Die Bestimmung des Sollmotormoments beim Schaltvorgang erfolgt mit Hilfe von Größen, die der Motorsteuereinheit vorliegen. Informationen über das Ausmaß des zu verändernden Drehmoments von der Getriebesteuereinheit sind nicht notwendig. Diese muß lediglich Informationen bezüglich des vorliegenden Schaltvorgangs (z.B. Hoch- oder Rückschaltung) liefern. Besondere Bedeutung hat daher die erfindungsgemäße Lösung im Fehlerfall, wenn ein von der Getriebesteuereinheit zu ermittelndes Sollmotormoment die Motorsteuereinheit nicht erreicht.

Zum Schutz des Getriebes vor Schädigung wird ein maximal erlaubtes Kupplungsmoment abhängig von Drehzahl und/oder Geschwindigkeit des Fahrzeugs bei eingelegter Fahrstufe vorgegeben. Aus diesem Moment wird unter Berücksichtigung der Verlustmomente der Antriebseinheit und Momentenanteile der Verbraucher ein maximales Verbrennungsmoment gebildet, das bei Überschreiten durch die aus dem Stand der Technik bekannten Maßnahmen eingehalten wird. Als Alternative ist vorgesehen, bei eingelegter Gangstufe für jede Fahrstufe einen Festwert für das Kupplungsmoment vorzugeben, der dann aktiv wird, wenn die Motordrehzahl größer als eine Schwelle und die Fahrzeuggeschwindigkeit kleiner als eine Schwelle ist. Die Koordination zwischen den Sollmotormomenten zum Getriebeschutz, zur Steuerung eines Schaltvorgangs, einer Antriebsschlupfregelung und dem Fahrerwunsch wird durch Minimalwertauswahl durchgeführt, wobei der jeweils kleinste zur Einstellung des Motormoments weitergeleitet wird. Um eine zu große Momentenreduktion beim Schaltvorgang oder bei ASR-Eingriff zu vermeiden, werden die entsprechenden Sollmomente auf einen Minimalwert begrenzt.

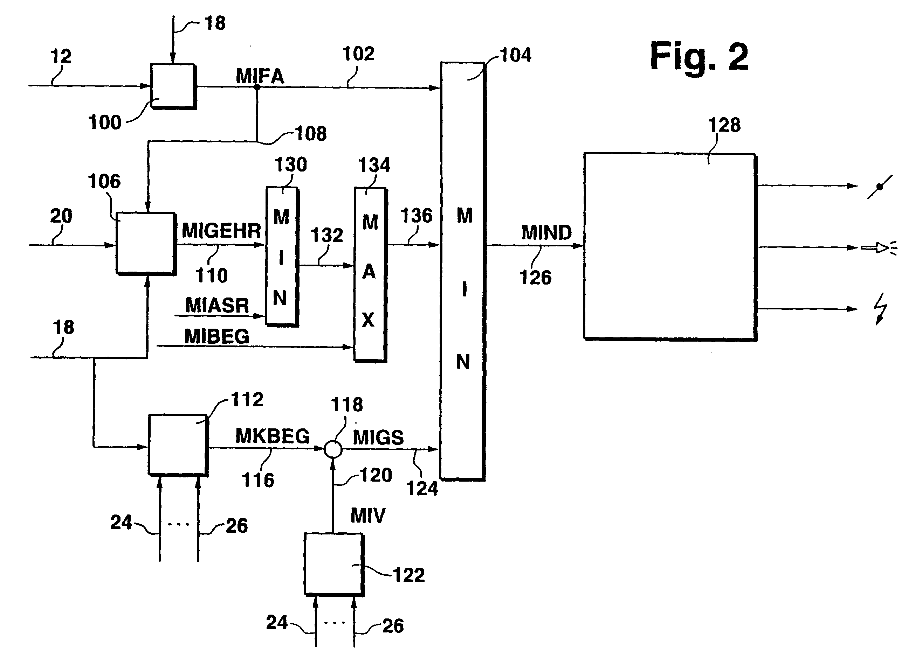

Die beschriebene Vorgehensweise wird im Rahmen des Programms eines Mikrocomputers, der Teil der Steuereinheit 10 ist, durchgeführt. Die Struktur dieses Programms ist anhand des Übersichtsblockschaltbildes nach Figur 2 dargestellt.

Dabei ist ein erstes Kennfeld 100 vorgesehen, in welchem aus der über die Leitung 12 zugeführten Fahrpedalstellung und der über die Leitung 18 zugeführten Motordrehzahl das vom Fahrer vorgegebene Sollmoment MIFA bestimmt wird. Dieses wird über die Leitung 102 zur Minimalwertauswahl 104 geführt. In einem anderen vorteilhaften Ausführungsbeispiel, in dem die Fahrpedalstellung nicht erfaßt wird, wird das Sollmoment MIFA aus dem optimalen Moment MIOPT als Funktion von Drehzahl und Last multipliziert mit dem Zündwinkelwirkungsgrad gebildet. Der Zündwinkelwirkungsgrad stellt dabei den Momentenbetrag der Abweichung des Zündwinkels, der ohne Eingriffe eingestellt werden würde, zum optimalen Zündwinkel (höchster Wirkungsgrad) dar. Ferner ist wenigstens ein zweites Kennfeld 106 vorgesehen, in dem abhängig von dem über die Leitung 108 zugeführten Fahrerwunschmoment MIFA, der über die Leitung 20 zugeführten Information über die Schaltrichtung sowie der über die Leitung 18 zugeführten Motordrehzahl das Sollmotormoment bei Getriebeeingriff MIGEHR bestimmt wird. In einem bevorzugten Ausführungsbeispiel sind anstelle des Kennfeldes 106 zwei Kennfelder, eines für die Hoch- und eines für die Rückschaltung vorgesehen. Das Sollmoment MIGEHR wird über eine Leitung 110 zur Minimalwertauswahlstufe 130 geführt. Dieser wird ferner über eine der Eingangsleitungen 24 bis 26 ein Sollmoment MIASR bei ASR-Eingriff zugeführt. Der kleinere der Werte wird über eine Leitung 132 auf eine Maximalwertauswahlstufe 134 geführt, der ferner das Minimalmoment MIBEG aus einem Speicher zugeführt wird. Der größere der beiden Werte wird dann über eine Leitung 136 zur Minimalwertauswahlstufe 104 geführt. In einem vorteilhaften Ausführungsbeispiel werden nicht die Verbrennungsmomente als Sollwerte vorgegeben, sondern die Kupplungsmomente. Gemäß dem eingangs genannten Stand der Technik sind dann die Verlustmomente der Antriebseinheit und die von eingeschalteten Verbrauchern aufgebrauchten Drehmomentenanteile zu berücksichtigen.

In einem weiteren Kennfeld 112 wird auf der Basis der zugeführten Motordrehzahl (Leitung 114) der eingelegten Fahrstufe und/oder der Fahrzeuggeschwindigkeit, (Leitungen 24 bis 26) das Begrenzungskupplungsmoment MKBEG bestimmt und über die Leitung 116 zur Verknüpfungsstelle 118 geführt. Beim Kennfeld 112 kann es sich um ein drehzahl- und fahrgeschwindigkeitsabhängiges Kennfeld für das maximale Kupplungsmoment handeln, als auch um Festwerte, die unter bestimmten Betriebsbedingungen (eingelegte Fahrstufe, Motordrehzahl größer und Fahrgeschwindigkeit kleiner als vorgegebene Schwellen) für jede Fahrstufe ausgegeben wird.

Der Begrenzungswert wird über die Leitung 120 aus einem Kennfeld 122 das Verlust- und Verbrauchermoment MIV zugeführt. Dieses Verlust- und Verbrauchermoment wird gemäß dem eingangs genannten Stand der Technik nach Maßgabe von Betriebsgrößen wie Motortemperatur, Motordrehzahl und Status von Nebenverbrauchern, die über die Leitungen 24 bis 26 zugeführt werden, gebildet. Durch Addition des Begrenzungskupplungsmoments und des Verlustmoments wird das Begrenzungsverbrennungsmoment MIGS gebildet, welches von der Verknüpfungsstelle 118 über die Leitung 124 zur Minimalwertauswahlstufe 104 geführt wird. Die Ausgangsleitung 126 dieser Minimalwertauswahlstufe übermittelt das ausgewählte Sollmoment MIND einem Berechnungsblock 128, in dem die aus dem Stand der Technik bekannten Maßnahmen zur Umrechnung eines Sollverbrennungsmoments in eine Einstellung der Luftzufuhr, der Kraftstoffzumessung und/oder des Zündwinkels durchgeführt wird.

Bei der Realisierung der Momentensteuerung während eines Schaltvorgangs ist eine zeitliche Rampe beim Auf- und Abregeln des Solldrehmoments vorgesehen.

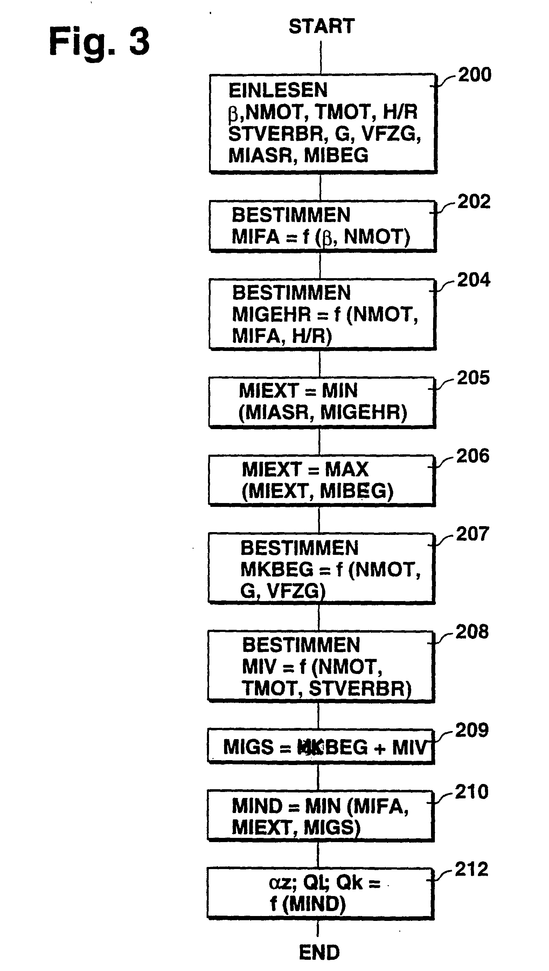

Ein Realisierungsbeispiel der erfindungsgemäßen Lösung als Programm eines Mikrocomputers ist als Flußdiagramm in Figur 3 dargestellt. Der dort dargestellte Programmteil wird zu vorgegebenen Zeitpunkten, beispielsweise in Intervallen von 10 bis 100 msec, eingeleitet. Im ersten Schritt 200 werden die notwendigen Betriebsgrößen Fahrpedalstellung β oder Motorlast, Motordrehzahl Nmot, Motortemperatur Tmot, eine Information H/R über den Schaltvorgang und die eingelegte Fahrstufe G, Fahrzeuggeschwindigkeit VFZG, der Status von Nebenverbrauchern STVERBR, das Sollmoment MIASR im ASR-Fall sowie das Begrenzungsmoment MIBEG eingelesen.

Daraufhin wird im Schritt 202 aus einem vorbestimmten Kennfeld wenigstens abhängig von Motordrehzahl und Fahrpedalstellung bzw. Last und Zündwinkelwirkungsgrad das vom Fahrer vorgegebene Sollmoment MIFA bestimmt. Im darauffolgenden Schritt 204, abhängig von der Information über den Getriebeeingriff, der Motordrehzahl und des Fahrersollmoments, das Sollmoment bei Getriebeeingriff MIGEHR bestimmt. Dieser Wert ist außerhalb eines Schaltvorgang auf einem Maximalwert, der größer als das maximal einstellbare Moment ist. Daraufhin wird in den Schritten 205 und 206 das externe Sollmoment MIEXT als das kleinste der Sollwert MIASR und MIGEHR und das größte dieses Wertes MIEXT und des Begrenzungsmoments MIBEG gebildet. Im nächsten Schritt 207 wird das Begrenzungskupplungsmoment MKBEG, abhängig von Motordrehzahl, Gangstellung, Fahrzeuggeschwindigkeit, berechnet. Im darauffolgenden Schritt 208 wird dann in bekannter Weise auf der Basis von Motordrehzahl Nmot, Motortemperatur Tmot und dem Status der Nebenverbraucher das Verlustmoment MIV bestimmt und im Schritt 209 das Begrenzungsmoment für den Getriebeschutz MIGS als Addition von Verlustmoment MIV und Begrenzungskupplungsmoment MKBEG berechnet. Im nächsten Schritt 210 wird das Sollmoment MIND als Minimalwertauswahl aus den Sollmomenten MIEXT, MIGS und MIFA gebildet und im darauffolgenden Schritt 212 in bekannter Weise Zündwinkel αz, Luftzufuhr Ql und/oder Kraftstoffzumessung Qk eingestellt. Danach wird der Programmteil beendet und zu gegebener Zeit wiederholt.

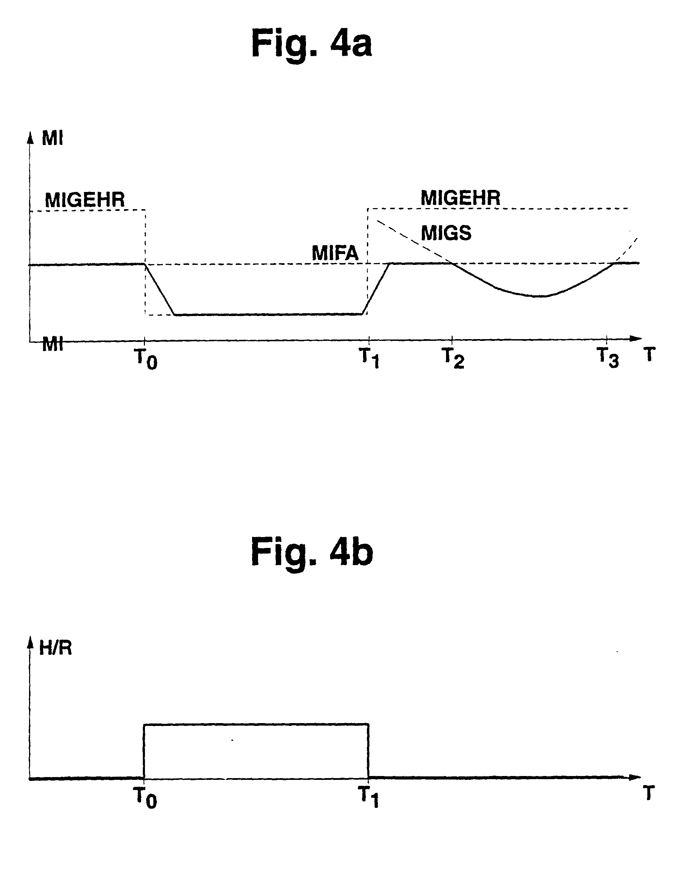

In Figur 4 sind Zeitdiagramme zur Darstellung der erfindungsgemäßen Lösung gezeigt. In Figur 4a wird dabei der zeitliche Verlauf der verschiedenen Sollmomentenwerte, in Figur 4b der zeitliche Verlauf des Getriebeinformationssignals dargestellt. Zunächst sei das Sollmoment MIND (durchgezogene Linie) durch das Fahrersollmoment MIFA bestimmt. Das Sollmoment bei Getriebeeingriff MIGEHR sei auf seinem Maximalwert, so daß in der Minimalwertauswahl das Fahrersollmoment als Sollmoment ausgewählt wird. Zum Zeitpunkt T0 beginne ein Schaltvorgang, der zum Zeitpunkt T1 beendet sei. Dies führt zur Berechnung des Sollmomentenwerts bei Getriebeeingriff gemäß der obigen Darstellung. Das Sollmoment für den Getriebeeingriff sinkt dabei unter das Fahrersollmoment. Dies führt dazu, daß in der Minimalwertauswahl das Sollmoment bei Getriebeeingriff als neues Sollmoment ausgewählt wird. Der Übergang zwischen den beiden Sollmomenten wird dabei durch eine zeitliche Rampe geglättet. Entsprechend wird zum Zeitpunkt T1 bei Beendigung des Schaltvorgangs das Sollmoment bei Getriebeeingriff wieder auf seinen Maximalwert gesetzt. Ab diesem Zeitpunkt ist wieder das Sollmoment des Fahrers Führungsgroße. Auch hier wird der Übergang über eine zeitliche Rampe bewerkstelligt. Zum Zeitpunkt T2 gerät das Fahrzeug in einen Betriebszustand, in dem das Begrenzungsmoment für den Getriebeschutz MIGS unterhalb des Fahrersollmoments sinkt. Daher wird ab diesem Zeitpunkt das Sollmoment MIND durch das Begrenzungsmoment dargestellt. Zum Zeitpunkt T3 übersteigt das Begrenzungsmoment das Fahrermoment, so daß ab diesem Zeitpunkt das Sollmoment wieder durch den Fahrer bestimmt wird.

Die Momentenbestimmung während eines Schaltvorgangs und die Bestimmung des Grenzmoments zum Getriebeschutz werden in einem bevorzugten Ausführungsbeispiel zusammen angewendet. In anderen vorteilhaften Ausführungsbeispielen wird die Momentenbestimmung bei Getriebeeingriff eingesetzt.

## Patentansprüche

1. Verfahren zur Steuerung des von einem Motor abgegebenen Drehmoments, wobei das Drehmoment des Motors abhängig von wenigstens einem vom Fahrer vorgegebenen Sollmomentenwert eingestellt wird, **dadurch gekennzeichnet, daß** während einer Getriebeschaltung ein Sollmomentenwert (MIGEHR) abhängig von dem Sollmomentenwert (MIFA) des Fahrers vorgegeben wird und das von dem Motor abgegebene Drehmoment auf den jeweils kleineren Sollmomentenwert eingestellt wird.

2. Verfahren nach Anspruch 1, **dadurch gekennzeichnet, daß** ein Begrenzungsmoment (MKBEG) bestimmt wird, welches das von dem Motor abgegebene Drehmoment zum Schutz des Getriebes begrenzt und das Drehmoment (MIND) des Motors auf der Basis des kleineren Wertes aus Sollmomentenwert (MIFA) und Begrenzungsmoment (MKBEG) eingestellt wird.

3. Verfahren nach Anspruch 1, **dadurch gekennzeichnet, daß** das Solldrehmoment während eines Schaltvorgangs abhängig von der Motordrehzahl vorgegeben wird.

4. Verfahren nach Anspruch 3, **dadurch gekennzeichnet, daß** das Sollmoment während eines Schaltvorgangs abhängig von einer Information über die Schaltrichtung vorgegeben wird.

5. Verfahren nach Anspruch 1, **dadurch gekennzeichnet, daß** bei Beginn des Getriebeeingriffs das Sollmoment vom momentanen Wert mit einer Rampe auf den Sollwert bei Getriebeeingriff abgeregelt, bei Ende des Getriebeeingriffs gemäß einer Rampe aufgeregelt wird.

6. Verfahren nach Anspruch 2, **dadurch gekennzeichnet, daß** das maximal erlaubte Drehmoment zum Getriebeschutz abhängig von der Motordrehzahl, der Fahrstufe und/oder der Geschwindigkeit des Fahrzeugs vorgegeben wird.

7. Verfahren nach Anspruch 2, **dadurch gekennzeichnet, daß** für jede Fahrstufe ein Festwert als Begrenzungswert vorgesehen ist, der dann vorgegeben wird, wenn die Motordrehzahl größer und die Fahrzeuggeschwindigkeit kleiner als eine Geschwindigkeitsschwelle ist.

8. Verfahren nach einem der vorhergehenden Ansprüche, **dadurch gekennzeichnet, daß** das Sollmoment ein Wert für das Verbrennungsmoment einer Brennkraftmaschine oder das Kupplungsmoment des Motors ist.

9. Vorrichtung zur Steuerung des von einem Motor abgegebenen Drehmoments, mit einer Steuereinheit, welche das Drehmoment des Motors abhängig von einem vom Fahrer vorgegebenen Sollmomentenwert einstellt, **dadurch gekennzeichnet, daß** die Steuereinheit (10) auf der Basis des Fahrersollmomentenwertes (MIFA) während einer Getriebeschaltung einen Sollmomentenwert (MIGEHR) vorgibt und die Steuereinheit (10) das Drehmoment (MIND) des Motors abhängig von dem jeweils kleineren dieser Momentenwerte einstellt.

10. Vorrichtung nach Anspruch 9, **dadurch gekennzeichnet, daß** die Steuereinheit (10) zum Schutz eines automatischen Getriebes ein Begrenzungsdrehmomentenwert (MKBEG) vorgibt, auf dessen Basis sie das Drehmoment (MIND) des Motors einstellt, wenn dieser Wert kleiner als der vom Fahrer vorgegebene Sollmomentenwert (MIFA) ist.

## Claims

1. Method for controlling the torque output by an engine, the torque of the engine being set as a function of at least one setpoint torque value predefined by the driver, **characterized in that** during a gearbox shifting operation a setpoint torque value (MIGEHR) is prescribed as a function of the setpoint torque value (MIFA) of the driver and the torque output by the engine is set to the respective smaller setpoint torque value.

2. Method according to Claim 1, **characterized in that** a limiting torque (MKBEG) is determined which limits the torque output by the engine in order to protect the gearbox, and the torque (MIND) of the engine is set on the basis of the smaller value of the setpoint torque value (MIFA) and limiting torque (MKBEG).

3. Method according to Claim 1, **characterized in that** the setpoint torque is prescribed during a gear-changing operation as a function of the engine speed.

4. Method according to Claim 3, **characterized in that** the setpoint torque is prescribed during a gearchanging process as a function of an item of information relating to the gear-changing direction.

5. Method according to Claim 1, **characterized in that** when the intervention into the gearbox starts the setpoint torque is reduced from the instantaneous value to the setpoint value with a slope during the intervention into the gearbox and is increased with a slope at the end of the intervention into the gearbox.

6. Method according to Claim 2, **characterized in that** the maximum permitted torque is predefined as a function of the engine speed, the drive setting and/or the speed of the vehicle in order to protect the gearbox.

7. Method according to Claim 2, **characterized in that** for each drive setting a fixed value is provided as a limiting value which is predefined if the engine speed is higher, and the vehicle speed lower, than a speed threshold.

8. Method according to one of the preceding claims, **characterized in that** the setpoint torque is a value for the combustion torque of an internal combustion engine or for the coupling torque of the engine.

9. Device for controlling the torque output by an engine, having a control unit which sets the torque of the engine as a function of a setpoint torque value which is predefined by the driver, **characterized in that** the control unit (10) predefines a setpoint torque value (MIGEHR) on the basis of the driver's setpoint torque value (MIFA) during a gearbox shifting operation, and the control unit (10) sets the torque (MIND) of the engine as a function of the respective smaller value of these torque values.

10. Device according to Claim 9, **characterized in that** the control unit (10) predefines a limiting torque value (MKBEG) in order to protect an automatic gearbox, on the basis of which limiting value (MKBEG) it sets the torque (MIND) of the engine if this value is lower than the setpoint torque value (MIFA) predefined by the driver.

## Revendications

1. Procédé de commande du couple fourni par un moteur, selon lequel le couple du moteur est réglé en fonction d'au moins une valeur de consigne de couple prédéfinie par le conducteur,
**caractérisé en ce que**
pendant une commutation de la boîte de vitesses, on prédéfinit une valeur de couple de consigne (MIGEHR) en fonction de la valeur du couple de consigne (MIFA) donnée par le conducteur, et on règle le couple fourni par le moteur sur la plus petite valeur des couples de consigne.

2. Procédé selon la revendication 1,
**caractérisé en ce qu'**
on définit un couple limite (MKBEG) qui limite le couple fourni par le moteur pour protéger la boîte de vitesses, et on règle le couple (MIND) du moteur sur la base de la plus petite des deux valeurs correspondant au couple de consigne (MIFA) et au couple limite (MKBEG).

3. Procédé selon la revendication 1,
**caractérisé en ce qu'**
on prédéfinit le couple de consigne pendant une opération de commutation en fonction du régime du moteur.

4. Procédé selon la revendication 3,
**caractérisé en ce qu'**
on prédéfinit le couple de consigne pendant une opération de commutation en fonction d'une information concernant le sens de commutation.

5. Procédé selon la revendication 1,
**caractérisé en ce qu'**
au début de l'action sur la boîte de vitesses, on diminue le couple de consigne à partir de la valeur instantanée, suivant une rampe jusqu'à la valeur de consigne pour l'action sur la boîte de vitesses et à la fin de cette action, on règle dans le sens croissant suivant une rampe.

6. Procédé selon la revendication 2,
**caractérisé en ce que**
le couple maximum autorisé pour la protection de la boîte de vitesses est prédéfini en fonction du régime moteur, du rapport de vitesse et/ou de la vitesse du véhicule.

7. Procédé selon la revendication 2,
**caractérisé en ce que**
pour chaque étage de rapport on prévoit une valeur fixe comme valeur limite, qui est ensuite prédéfinie si la vitesse de rotation du moteur est supérieure à un seuil et si la vitesse du véhicule est inférieure à un seuil de vitesse.

8. Procédé selon l'une quelconque des revendications précédentes,
**caractérisé en ce que**
le couple de consigne est une valeur pour le couple de combustion ou pour le couple d'embrayage du moteur à combustion interne.

9. Dispositif de commande du couple fourni par un moteur comportant une unité de commande qui règle le couple du moteur en fonction de la valeur de consigne du couple prédéfinie par un conducteur,
**caractérisé en ce que**
l'unité de commande (10) prédéfinit une valeur de couple de consigne (MIGEHR) sur la base de la valeur de couple de consigne (MIFA) définie par le conducteur pendant une commutation, et l'unité de commande (10) règle le couple (MIND) du moteur en fonction du plus petit de ces couples.

10. Dispositif de commande selon la revendication 9,
**caractérisé en ce que**
pour protéger une boîte de vitesses automatique, l'unité de commande (10) prédéfinit une valeur de couple limite (MKBEG) sur la base de laquelle se règle le couple (MIND) du moteur si cette valeur est inférieure à la valeur de couple de consigne (MIFA) prédéfinie par le conducteur.
